# EUROPEAN PATENT SPECIFICATION

(11) **EP 3 787 931 B1**
(45) Date of publication and mention of the grant of the patent: **13.12.2023**
(21) Application number: 19742995.4
(22) Date of filing: 06.05.2019
(51) Int. Cl.: B60R 1/072, B60R 1/074

(54) **VEHICLE MOUNTED BACKWARD VIEWING DEVICE**
FAHRZEUGMONTIERTE RÜCKBLICKVORRICHTUNG
DISPOSITIF DE VISUALISATION ARRIÈRE MONTÉ SUR VÉHICULE

(30) Priority: 04.05.2018 NL 2020884
(43) Date of publication of application: 10.03.2021
(73) Proprietor: MCi (Mirror Controls International) Netherlands B.V., 3447 GK Woerden (NL)
(72) Inventor: SRIDHAR, Jeyakrishna, 3447 GK Woerden (NL)
(74) Representative: V.O.
(86) International application number: PCT/NL2019/050270
(87) International publication number: WO 2019/212355

(56) References cited:
- EP-A2- 2 006 998
- WO-A1-02/090149
- DE-A1- 10 128 998
- DE-A1-102009 001 658
- US-A1- 2003 034 752

## Description

The invention relates to a motor driven viewing device for mounting on the outside of a motor vehicle, such as an adjustable rear view mirror device for backward viewing from the driver's seat of the motor vehicle.

### Background

Backward view mirror devices for motor vehicles use electric motors to control the orientation of the mirror surface and to fold the mirror housing out and in before and after use of the vehicle. The same holds for more advanced backward viewing devices that contain a camera instead of a mirror. Folding out and in (referred to as "powerfold") serves to protect the mirror or camera when not in use. The motor driven viewing device is rotated to a folded orientation, wherein the mirror or camera faces a surface of the vehicle, when the motor driven viewing device is switched off, and folded out to an operational orientation, wherein a driver can use the mirror to see other vehicles. Control of the operational orientation of the mirror surface is used to adapt the backward view angle to different drivers. This involves manual control by the driver to make the electric motors adjust the orientation of the mirror until the driver gets a desired view.

It may also involve use of a memory to store a desired orientation setting, so that the device can make the mirror automatically return to a previously selected setting. The mirror orientation relative to the housing is usually returned to a folded position, wherein the mirror faces a surface of the vehicle, when the powerfold is used to fold in the housing, and returned to the selected setting after the powerfold is used to fold out the housing. In that case, the selected setting can be reproduced using the setting motors in combination with orientation sensors, such as a resistance sensor or a ripple counter, to detect when the mirror has returned to the stored setting. Similarly, when there is a change of driver, re-orientation to as different selected setting may be needed. Such backward view mirrors are known from WO 02/090149 A1 and DE 10128998 A1, which discloses a device as defined in the preamble of claim 9.

### Summary

Among others, it is an object to provide for a motor driven viewing device that requires fewer motors.

A motor driven viewing device according to claim 1 is provided. Herein the mirror or camera orientation around a first rotation axis is set by rotating the housing. The same electric DC motor is used both to drive rotation of the housing from its folded position to its operating position and to drive user controlled rotation around the first rotation axis to adjust the mirror or camera according to the needs of the user. Pulse width modulation is used to modulate the current to the electric motor so that different angular rotation speeds of the mirror or camera are realized during rotation of the housing from its folded position to its operating position and during user controlled rotation. This makes it possible to ensure that only a short time is needed to rotate the housing from its folded position to its operating position and that the mirror or camera does not rotate to make user controlled adjustment impracticable.

A pulse width modulation at a first pulse width modulation level is used when rotating the housing from its folded position to its operating position. A pulse width modulation at a second pulse width modulation level is used when adjusting the orientation. This first pulse width modulation level may correspond to continuous motor current supply (100% pulse width), which may be realized e.g. by using a control signal to steer the width to 100%, or by using a switch to supply the motor current bypassing the modulation circuit. Preferably, the first pulse width modulation level and the second pulse width modulation level are selected so that the rotation speed of the electric motor when supplied at the second supply current duty cycle level is less than a fifth or less than a quarter of the rotation speed of the electric motor when supplied at the first supply current duty cycle level.

In an embodiment, the motor driven viewing device has a further electric motor for driving rotation of the mirror or camera relative to the housing around a second rotation axis of the mirror or camera that is transverse to the first rotation axis. Preferably, the current to the further electric motor is continuous, without pulse width modulation, the further electric motor providing for a smaller angular rotation speed of the mirror or camera than the first electric motor when supplied by continuous current. Preferably, during user controlled adjustment, the angular rotation speeds around the first and second rotation axes are substantially equal or at least of the same order of magnitude. That is, when the further electric motor is configured to cause a rotation of the mirror or camera at a first angular rotation speed, the second supply current duty cycle level is set to make the housing rotate at a second angular rotation speed that equals the first angular rotation speed or differs by less than a factor of two from the first angular rotation speed (i.e. lies between half the first angular rotation speed and twice the first angular rotation speed). This helps to make user controlled adjustment of the mirror or camera orientation about the two rotation axes practicable.

In an embodiment the motor driven viewing device comprises a sensor for sensing sensor information indicative of a speed of rotation of the electric motor (e.g. a potentiometer, a Hall sensor, motor power supply ripple counter etc.), and the control circuit comprises a feedback loop configured to adjust the second supply current duty cycle level dependent on a difference between the speed of rotation of the electric motor indicated by said sensor information and a predetermined speed. A motor driven viewing device has to work in a variable environment that may experience supply voltage variation, wind load variations and temperature variation that affect operation. The rotation speed of a DC electric motor at a given duty cycle of current pulse width modulation may change as a result of such effects. A duty cycle that can be used under some circumstances might not even be sufficient to start or keep rotating under some circumstances. By using a feedback, to adjust the duty cycle dependent on the sensed speed, a proper speed can be ensured under more circumstances.

In a further embodiment the control circuit is configured to activate the feedback loop during said causing the housing to be rotated under control of the adjustment input signal or signals, but not during said cause the housing to be rotated from a folded orientation to an operational orientation when the motor driven viewing device is powered on. In this way it is ensured that the duty cycle will be sufficient to start and keep rotating relatively slowly during adjustment, and that a highest possible speed can be reached during unfolding.
In an embodiment the motor driven viewing device may also use the pulse width modulation to reduce the risk of overshoot of the operational orientation when the housing is folded out. This can also be used when a pulse width modulation is not used during user control, e.g. because another form of mechanical adjustment of the mirror or camera in the housing is used, such as manual adjustment. In this embodiment, the control circuit is configured to cause the pulse width modulation circuit to supply the current from the power supply input to the electric motor using the first supply current duty cycle level until a difference between an orientation of the housing and the operational orientation drops below a first predetermined non zero difference and to reduce the duty cycle level once the difference has dropped below said difference. In this embodiment the features of the claims that depend on claim 1 may be used mutatis mutandis. The motor driven viewing device according may comprise a further electric motor for rotation around the second rotation axis at a second rotations speed, the speed at the reduced duty cycle level being within a factor two of the second rotations speed. The reduced speed may be less than a fifth of the first motor rotation speed of the electric DC motor at the first supply current duty cycle level. A feedback loop may be used to control the reduced speed by adjusting the duty cycle. The feedback may be off when the first supply current duty cycle level is used. The first supply current duty cycle level may correspond to continuous current supply. A memory with stored information about the orientation may be used.

In an embodiment, once the difference has dropped below said first predetermined difference, the same duty cycle level may be used as during user controlled adjustment. However, in other embodiments the duty cycle levels may differ and/or a plurality of different duty cycle levels may be used once the difference has dropped below said first predetermined difference.

Furthermore, a motor driven viewing device according to claim 9 is provided.

### Brief description of the drawing.

These and other object and advantageous aspects will become apparent from a description of exemplary embodiments, with reference to the following figures.
- Figure 1: shows a motor driven mirror device
- Figure 2: shows an electrical schematic of a motor driven mirror device
- Figure 3: shows a state diagram of a controller
- Figure 3a: shows a duty cycle as a function of time

Detailed description of exemplary embodiments

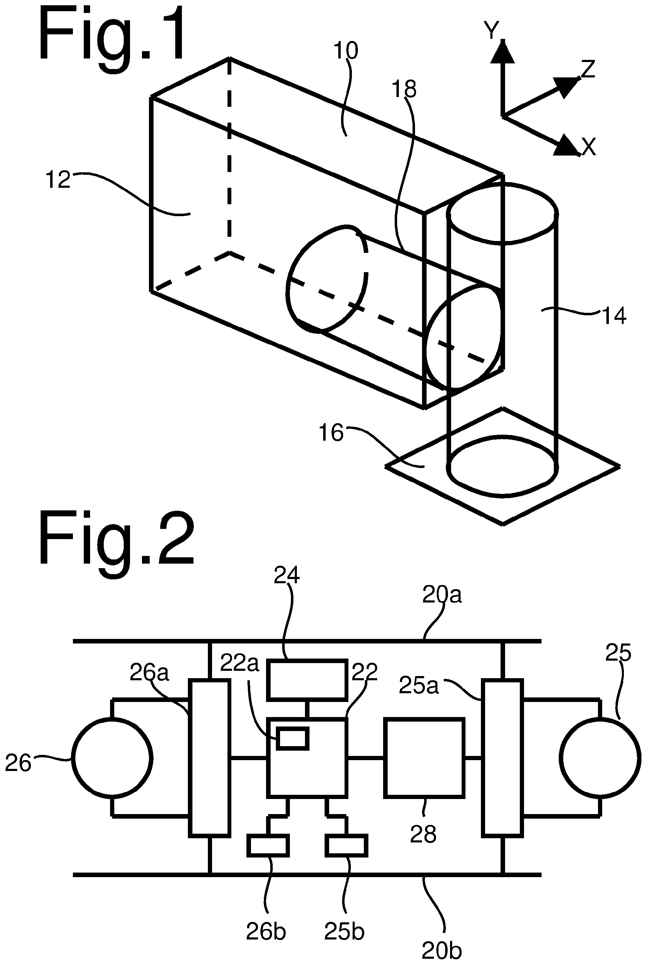

Figure 1 schematically shows a motor driven mirror device, comprising a mirror housing 10, a mirror 12 in mirror housing 10, a first electric motor assembly 14 for rotating mirror housing 10 relative to a base structure 16 of the mirror device around a y-axis and a second electric motor assembly 18 to rotate mirror 12 relative to mirror housing 10 around an x-axis. Although first and second electric motor assembly 14 are shown schematically as cylinders along their respective rotation axes, it should be appreciated that in reality the motors may be located elsewhere and that the assemblies may comprise transmission elements, such as gear wheels to transmit motor motion to motion of housing 10 and mirror 12. First electric motor assembly 14 and second electric motor assembly 18 may each comprise an electric motor and a transmission gear, so that the rotation speed of the motors need not be equal to the speed of angular rotation of the mirror resulting from the rotation of the motor. The rotation axes of mirror rotation due to first electric motor assembly 14 and second electric motor assembly 18 are transverse to each other and the normal of the surface of mirror 12, e.g. with the rotation axis of first electric motor assembly 14 directed along a substantially vertical y-direction and the rotation axis of second electric motor assembly 18 along a substantially horizontal x-direction, both substantially perpendicularly to the z-direction perpendicular to the surface of mirror 12. In use, base structure 16 of the mirror device is mounted on the outside of a vehicle, so that the mirror housing is in view from a driver's seat of the vehicle.

The motor driven mirror device is an example of a more general motor driven viewing device which may alternatively contain a camera instead of the mirror, for use together with a display screen in or on the vehicle to show images captured by the camera. In the following embodiments of the motor driven mirror device will be described as an example of a motor driven viewing device, with the understanding that the mirror may be replaced by a camera.

Figure 2 shows an electrical schematic of a motor driven mirror device, comprising a first and second power supply terminal 20a,b, a control circuit an input device 24 and a first and second electric motor 25, 26. The The control circuit comprises a controller 22, first and second switch circuit 25a, 26a, a first and second sensor 25b, 25c and a pulse generator circuit 28. Together, first switch circuit 25a and pulse generator circuit 28 form a pulse width modulation circuit, that modulates the current supplied from power supply terminal 20a,b through first electric motor 25 into current pulses. The components of the control circuit may be located anywhere, for example in mirror housing 10, in base structure 16, or elsewhere in the vehicle, or distributed over such locations.

Controller 22 has a second output coupled to a control input of second switch circuit 26a. Controller 22 may be implemented as a programmed microcontroller or computer, a programmed logic circuit or as a hardwired circuit. Controller 22 has a first output coupled to a control input of pulse generator circuit 28. Pulse generator circuit 28 has an output coupled to a control input of first switch circuit 25a. As used herein, the expression "the controller is configured to" will be used to refer to functions implemented by instructions in the program or realized by dedicated logic and/or analogue circuits in the controller. Although an embodiment is shown wherein pulse generator circuit 28 is shown as a separate circuit, in other embodiments, the function of pulse generator circuit 28 may be performed by a data processing circuit, such as controller 22.

Although an embodiment with a first and second electric motor 25, 26 is shown, it should be noted that a first electric motor 25 may suffice when no, or only direct manual adjustment of the mirror orientation around the horizontal rotation axis is used. In that case second electric motor 26, second switch circuit 26a and second sensor 26b may be omitted.

First and second electric motor 25, 26 are DC motors, configured to rotate in a direction corresponding to the polarity of a DC current flowing through the motor, when such a DC current is supplied to the motor. In operation, a DC voltage is available between first and second power supply terminal 20a,b. First and second switch circuit 25a, 26a are connected between power supply terminals 20a,b and first and second electric motor 25, 26 respectively. First and second switch circuit 25a, 26a provide for switchable connections between electric motors 25, 26 and power supply terminals 20a,b, to control whether current is supplied and, if so, the polarity of the current.

Controller 22 has inputs coupled to input device 24 and outputs of first and second sensor 25b, 26b. First and second sensor 25b, 26b are orientation sensors that directly or indirectly sense an orientation of mirror 12, such as such a resistance sensor (e.g. a potentiometer) a ripple counter (e.g for counting motor power supply ripples), or a Hall sensor, The mirror orientation may be sensed by sensing the orientation of the housing.

In an embodiment, input device 24 may comprise a set of push-buttons for selecting up and down and left and right rotation of mirror 12. Although an embodiment is shown wherein input device 24 is part of motor driven mirror device, this is not necessary. For example, selecting of up and down and left and right rotation may be controlled by a computer in the vehicle based on user input into that computer. In this case the computer will be said to form input device 24, and it is not part of the motor driven mirror device.

First and second electric motor 25, 26 are DC motors that rotate at different speeds when supplied with the same DC voltage from power supply terminals 20a,b. The angular rotation speed V1 of the mirror due to first electric motor 25 when continuously connected to this voltage is higher than the angular rotation speed V2 of the mirror due to second electric motor 26 when continuously connected to this voltage, e.g. by a factor of at least five and preferably by a factor of at least ten.

Controller 22 is configured to use pulse generator circuit 28 to reduce the rotation speed of first electric motor 25 in selected states of controller 22, so that the angular rotation speeds of the mirror V2 that will be realized by first and second electric motor 25, 26 becomes substantially the same, e.g. not different by more than a factor of two. In at least one state controller 22 causes first electric motor 25 to rotate substantially at the speed V1 corresponding to continuous connection to the voltage between power supply terminals 20a,b.

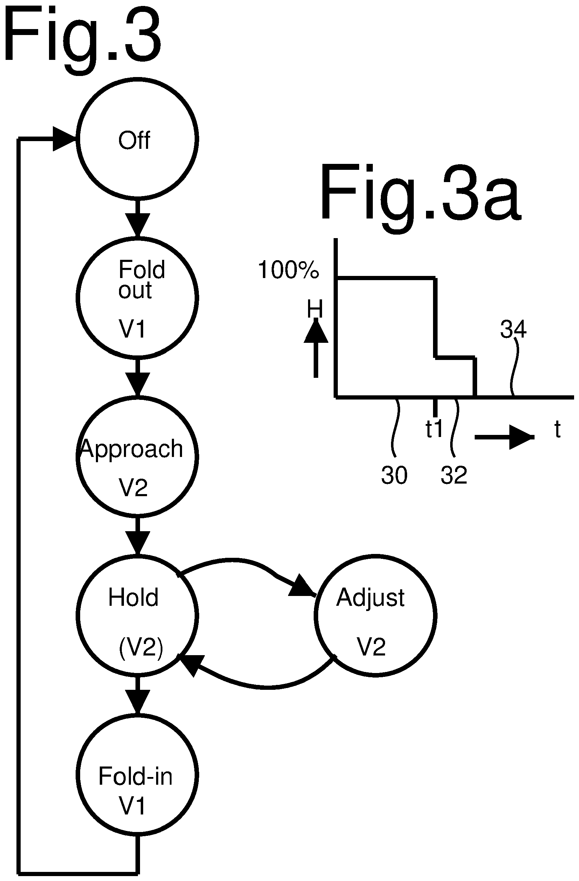

Figure 3 shows a state diagram of the operation of controller 22, combined with the angular rotation speeds V1, V2 used in these states. Controller 22 may be configured to select these speeds by means of pulse generator circuit 28 to provide different duty cycle levels (as used herein a hundred percent duty cycle level covers continuous supply). In addition to an "off' state, wherein controller 22 is switched off and first and second electric motors 25, 26 stand still, controller 22 is configured to operate in a fold out state, an optional approach state, a hold state, an adjustment state and a fold in state. Controller 22 drives first electric motor 25 and optionally second electric motor 26 in the fold out state, the approach state and the fold in state to move mirror housing 10 between its operational position and safe position wherein the front of mirror housing 10 faces the vehicle. These positions correspond to different orientations of mirror housing 10 relative to the base of the device. The orientations in the safe position and the operational position will be referred to as the first and second orientation respectively.

The normal operating state is the hold state, wherein controller 22 holds the orientation of the mirror constant. In principle, no current needs to be supplied to first and second electric motor 25, 26 in the hold state. Controller 22 may be configured to use first and second switch circuit 25a, 26a to switch off current supply to first and second electric motor 25, 26 in this case.

The adjustment state is provided to enable the user to adjust the orientation of the mirror to a desired orientation under control of an adjustment input signal or signals that are provided to an input of controller 24. The adjustment input signal or signals are supplied by input device 24 , based on user interaction with input device 24. As noted, input device 24 may comprise a set of push-buttons for selecting up and down and left and right rotation of mirror 12 within mirror housing 10 or by means of rotation of mirror housing 10. However any other suitable user control means may be used. Input device may be a part of the motor driven mirror device, alternatively, input device 24 may be an external device, in communication with the motor driven mirror device. In an embodiment controller 22 is configured to switch from the hold state to the adjustment state when the user activates input device 24.

In the adjustment state, controller 22 controls first switch circuit 25a and/or second switch circuit 26a to supply current according to the selected polarity to first and/or second electric motor 25, 26. In the adjustment state, controller 22 uses pulse generator circuit 28 to set the duty cycle level of the current supplied to first electric motor 25 to cause first electric motor 25 to rotate at an angular rotation speed of for example between two to five degrees per second. Preferably, in embodiments wherein second electric motor 26 is used, the angular rotation speed due to first electric motor 25 is equal to, or the same order of magnitude as the angular rotation speed caused by second electric motor 26 in the adjustment state (between half and twice that angular rotation speed).

In embodiments with and without second electric motor 26 the angular rotation speed in the adjustment state is lower than the angular rotation speed in the fold out state (e.g. thirty to sixty degrees per second), which substantially corresponds to the speed obtained with continuous current supply to first electric motor 25. Controller 22 achieves this by setting the duty cycle of the current through first electric motor 25. The low speed makes it practicable for the user to adjust the mirror based on observation of the resulting field of view.

Once the mirror has reached an orientation that is accepted by the user, controller 22 reads orientation information from first and second sensor 25b, 26b and stores this information in memory 22a. Controller 22 may do so for example when the user presses a preset button (not shown) that directly controls the storing or automatically with a delay after a last change of orientation.

The fold out state and the optional approach state are used rotate mirror housing 10 from the off position to the operating position, dependent on the orientation information stored in memory 22a. Controller 22 is configured to use pulse generator circuit 28 to cause to first electric motor 25 to rotate at different speeds V1, V2 in the fold out state and the optional approach state respectively. Controller 22 is configured to cause pulse generator circuit 28 to make first switch circuit 25a supply current to first electric motor 25 at a first duty cycle level that may correspond to continuous current supply, or at least with substantially hundred percent duty cycle in the fold-out state, so that first electric motor 25 will rotate at a first speed V1 in this state. The speed of angular rotation of the mirror housing may lie in a range of thirty to sixty degrees per second at the first rotation speed V1 of the first electric motor.

Figure 3a shows the duty cycle level H as a function of time t, with time intervals 30, 32, 34 wherein controller 22 is in the fold out state, the optional approach state and the hold state respectively. Controller 22 is configured to monitor orientation information from first sensor 25b when in the fold out state. Controller 22 is configured to switch from the fold-out state to the approach state when the difference between the sensed orientation information from first sensor and the stored orientation information of first sensor 25b from memory 22a becomes less than a predetermined first threshold Ta. The time when this happens is indicated as t1.

Controller 22 is configured to cause pulse generator circuit 28 to make first switch circuit 25a supply current to first electric motor 25 only during pulse periods in the optional approach state, the pulse periods having a second duty cycle level H of less than a hundred percent, e.g. less than fifty percent, so that first electric motor 25 will rotate at a speed V2 smaller than V1 in the optional approach state. For example, the speed V2 may be less than a fifth of V1, or less than a quarter of V1 or less than half V1. As noted, in an embodiment the function of pulse generator circuit 28 may be performed by controller 22, when controller 22 is configured to use making first switch circuit 25a to switch the connections between first electric motor 25 and first and second power supply terminal 20a, b switch on and off with the second duty cycle level.

Switching from continuous, or near continuous, current supply in the fold-out state to current supply with the second duty cycle level has the effect that the rotation speed is reduced from V1 to V2. The predetermined first threshold Ta is preferably selected at least so large as to exclude overshoot whereby the difference between the sensed orientation information from first sensor and the stored orientation information of first sensor 25b from memory 22a would change sign. A suitable value of the first threshold Ta may be determined experimentally. For a given motor driven mirror device it may depend on the motor speed and inertia of the mirror housing, motor etc.

Use of switching from continuous, or near continuous, current supply in the fold-out state to current supply with the second duty cycle level has the advantage that the time needed for getting the mirror at the desired orientation can be reduced by using a fast fold out speed over most of the fold out angle range, and avoiding a need to compensate for overshoot, or at least for a large overshoot when setting the desired orientation.

In an embodiment, controller 22 is configured to monitor orientation information from first sensor 25b, in the approach state. When the difference between the sensed orientation information from first sensor 25b and the stored orientation information for this sensor from memory 22a becomes less than a first predetermined threshold T2, with T2<Ta, controller 22 causes first switch circuit 25a to switch off current supply to first electric motor 25 to be switched off. Similarly, controller 22 may be configured to monitor orientation information from second sensor 26b in the approach state. When the difference between the sensed orientation information from second sensor 26b and the stored orientation information for this sensor from memory 22a becomes less than a first predetermined threshold, controller 22 causes second switch circuit 26a to switch off current supply to second electric motor 26 to be switched off. In this embodiment, use of switching from continuous, or near continuous, current supply in the fold-out state to current supply with the second duty cycle level has the advantage that the potential of disturbance of orientation adjustment with second motor 26 due to rapid rotation of first electric motor is reduced.

In another embodiment, controller 22 is configured to monitor orientation information from first sensor 25b, and supply current to first electric motor 25 with the second duty cycle level in a first time interval and to monitor orientation information from second sensor 26b, and supply current to second electric motor 26 in a second time interval. In a further embodiment the second time interval may follow the first time interval. In another further embodiment, the second time interval may precede the first time interval, and optionally extend to time points wherein controller 22 is still in the fold-out state.

When the current to both first and electric motor 25, 26 has been switched off, controller 22 switches to the hold state. In principle, no current needs to be supplied to first and second electric motor 25, 26 in the hold state. However, in an embodiment, controller 22 may be configured to cause current supply to first electric motor 25 to be resumed in the hold state when sensed information from first sensor 25b indicates that the orientation of mirror housing 10 is disturbed by external forces. Controller 22 is configured to cause pulse generator circuit 28 to make first switch circuit 25a supply current to first electric motor 25 with the second duty cycle level in this case, similar to the approach mode, and to control the polarity of the current according to the sign of the difference between the sensed orientation information from first sensor 25b and the stored orientation information for this sensor from memory 22a. Use of current supply with the second duty cycle level in this mode has the advantage that overshoot during correction for disturbances can be reduced.

In a further embodiment, controller 22 may be also be configured to cause current supply to second electric motor 26 to be resumed in the hold state when sensed information from second sensor 26b indicates that the orientation of mirror 12 is disturbed by external forces. Controller 22 is configured use first and second switch circuit 25a, 26a to control the polarity of the current supplied to second electric motor 26 according to the sign of the difference between the sensed orientation information from second sensor 26b and the stored orientation information for this sensor from memory 22a.

In further embodiments, controller 22 may be configured to switch to selected ones of one or more further operating modes, such as a dooring prevention mode and/or different view angle modes such as a dead angle viewing mode. Controller 22 may be configured to set the duty cycle dependent on the selected operating mode.

For example, in the dooring mode controller 22 may be configured to rotate mirror 12 and housing 10 when the door of the vehicle is opened, so as to reflect a view from a driver or passenger seat in a constant direction backward along a side of the vehicle, from where other vehicles like bicycles may pass the vehicle. To do so, controller 22 may be configured to receive a measurement signal from a door angle sensor (not shown) that indicates a measured opening angle of the door and to control the rotation dependent on the measurement signal so that the reflected view direction remains constant. In this mode, controller 22 may be configured to control the duty cycle of the pulse width modulation dependent on the rate of change of the door angle, so as to promote a smooth motion of the housing.

As another example, in controller 22 may be configured to switch between different view angle modes during use, such as between a normal view angle mode and a dead angle view mode, wherein the reflected view direction from the driver seat is in different directions. Controller 22 may be configured to switch to 100% or near 100% duty cycle when switching to a different view angle mode. In a further embodiment, controller 22 may be configured to switch to a lower duty cycle when the difference between the measured orientation of mirror 12 and the target orientation of the mode is below a threshold.

As another example, in controller 22 may be configured to switch between different memorized view angle direction that have been set by different persons, for use when these persons are in the driver seat. As in the case of between different view angle modes, controller 22 may be configured to switch to 100% or near 100% duty cycle when switching to a view angle for a different person, and optionally to switch to a lower duty cycle when the difference between the measured orientation of mirror 12 and the target orientation of the mode is below a threshold

In another or a further embodiment a similar circuit as for first motor 25 may be used to control second motor 26. In this way a pulse width modulated supply current may be supplied to second motor as well. Controller 22 may be configured to switch between different view angle modes of second motor as well, e.g. between a normal mode and a parking mode, wherein the reflected view direction is directed at a curb when controller 22 is in a parking mode.

It has been found that in some cases use of a single predetermined duty cycle level in the approach state, the adjustment state and, if applicable, in the hold state is not sufficient to ensure that first electric motor 25 will rotate under all circumstances that can occur during operation of the motor driven mirror device. For example, when the motor driven mirror device is used on a vehicle, the available voltage difference between power supply terminals 20a,b, the ambient temperature and wind load, individually or in combination may have the effect that that first electric motor 25 will rotate under some circumstances, but remain at standstill under other circumstances when the same duty cycle level is used.

In an embodiment that addresses this problem, controller 22 is configured to adjust the second duty cycle level that will be used to realize the reduced motor speed V2 that will be used the adjustment state and optionally in the approach state and the hold state. Controller 22 may be configured to determine the rate of change of the orientation sensed by first sensor 25b and implement a feedback loop to raise or lower the second duty cycle level when the rate of change is below and above a target value respectively, when controller 22 used in the adjustment state and, if applicable, in the approach state and the hold state. The feedback loop may be an analog feedback loop or a digital feedback loop, wherein the duty cycle level is digitally computed. A proportional feedback may be used, but preferably an integrating feedback is used, which allows the feedback loop to memorize the duty cycle level required to obtain the desired speed. The feedback loop may be activated in the approach state and/or the adjustment state, but it may left inactive in the fold out state, so that a constant duty cycle level is used in the fold-out state, independent of the rotation speed. The feedback loop may also be inactive during switching to different view angle modes, such as switching to a view angle for a different person or to a dead angle viewing mode.

Although embodiments have been shown wherein the motor speed is adjusted only by means of adjustment of the pulse width, it should be understood that instead a combination of pulse width control and DC voltage control or current control may be used to control the time average current and thereby the rotation speed of the motor. For example the circuit may be configured to adjust the voltage or current level in the current on and/or current off phases of the pulse width modulation. For example the circuit may comprise a controllable DC bypass current source configured to supply a DC bypass current to the motor in parallel with the pulse width modulated current, so as to raise the current in the current off phase. As another example the circuit may comprise a controllable DC series current source configured to control the pulse width modulated current level in the current on phase. e.g. by reducing the voltage applied to the motor in the on phase. As is well known, reduction of the supply voltage of an electric motor can be used to reduce the motor speed. However, in practice the speed range that can be attained by voltage reduction may be too limited, since the motor may not be able to overcome friction at too low voltages. By a combination of pulse width control and DC voltage control a larger speed difference can be realized.

In an embodiment the mirror control device comprises a voltage or current adjustment element, the motor supply input being coupled to an output of the voltage or current adjustment element. In this embodiment, controller 22 may be configured to adjust average current supply level to the motor by adjusting the duty cycle levels and the voltage or current supplied to the motor. In the fold in and fold out state the full external voltage level and 100% (not-pulsed) duty cycle may be used, the current being as high as possible with the available voltage, whereas in the adjustment state and optionally in the approach state a lower duty cycle and/or voltage or current may be supplied (during the pulse, in the case that pulse width modulation is used). The voltage or current adjustment element may comprise an analog voltage or current regulator, or a resistor or other resistive circuit in parallel with an (electronic) switch, controller causing a high voltage and current level for use in the fold in and fold out states by making the switch conductive and a lower voltage and current level for use in the adjustment state by making the switch non-conductive.

Controller 22 may be configured to implement the feedback by adjusting the duty cycle level and voltage or current supplied to the motor together, or to adjust only one of the duty cycle level and the voltage or current initially, and adjust the other only once the adjusted duty cycle level or voltage or current has reached a threshold.

In addition to the described states, or instead of the hold state, controller 22 may be configured to support operation in a track state, to maintain a constant viewing direction. For example, when the device is mounted on a door, the mirror orientation may be changed in correspondence with movement of the door in the track state. The ability to operate in the track state may be realized for example by including a rotation or orientation sensor in the base structure 16 of the mirror device, for measuring the orientation (changes) of the door, controller 22 being configured to cause mirror housing 10 to be rotated in a way that keeps the direction of the view that a driver will see through the mirror constant.. Alternatively, a rotation or orientation sensor in the mirror housing may be used to sense the orientation (changes). Basically, this form of tracking is a matter of rotating mirror housing 10 at half the speed of orientation change of the door (or the same speed if a camera is used instead of a mirror). Controller 22 may be configured to compute the required rotation speed or angles or controller 22 may be provided with a look up table stored in its memory to look up required rotation (speed) based on the sensed angle of orientation.

In the track state, the required speed of rotation of mirror housing 10 may be of the same order as the speed of rotation in the fold in/out states. Controller 22 may be configured to adjust the speed of rotation of mirror housing 10 or its rotation angle by adjusting the pulse width modulation level.

## Claims

1. A motor driven viewing device for use on a vehicle, comprising
- a base structure (16) for mounting the viewing device on the vehicle;
- a rotatable housing (10);
- a device in the housing (10), the device selected from a group comprising a mirror (12);
- an electric DC motor (25) coupled to the housing (10) for driving a rotation of the housing (10) relative to the base structure (16) around a first rotation axis;
- a control circuit having an input (24) for receiving an adjustment input signal or signals for communicating user control of orientation of the device (12) from said group, the control circuit comprising a pulse width modulation circuit (25a, 28), the pulse width modulation circuit (25a, 28) being coupled between the electric DC motor (25) and a power supply input, the control circuit being configured
to cause the housing (10) to be rotated by causing the pulse width modulation circuit to supply current from the power supply input to the electric DC motor (25) using a first supply current duty cycle level, and
- to cause the housing (10) to be rotated under control of the adjustment input signal or signals by causing the pulse width modulation circuit (25a, 28) to supply the current using a second supply current duty cycle level, lower than the first supply current duty cycle level wherein the group consists of a mirror and a camera and wherein said rotation of the housing (10) using the first supply current duty cycle level is a rotation from a folded orientation to an operational orientation when the motor driven viewing device is powered on.

2. A motor driven viewing device according to claim 1, comprising a further electric motor (26) for driving rotation of the mirror (12) or camera relative to the housing (10) around a second rotation axis of the mirror (12) or camera that is transverse to the first rotation axis, the further electric motor (26) being configured to provide a first angular rotation speed of the mirror (12) or camera, the second supply current duty cycle level being set to make the housing (10) rotate at a second angular rotation speed that equals the first angular rotation speed or differs by less than a factor of two from the first angular rotation speed.

3. A motor driven viewing device according to any one of the preceding claims, wherein the electric DC motor (25) is configured to have a first motor rotation speed of when supplied at the first supply current duty cycle level and wherein the second supply current duty cycle level is selected so that a second motor rotation speed of the electric DC motor (25) when supplied at the second supply current duty cycle level is less than a fifth of the first motor rotation speed of the electric DC motor (25).

4. A motor driven viewing device according to any one of the preceding claims, comprising a sensor for sensing sensor information indicative of a speed of rotation of the electric DC motor (25), and wherein the control circuit comprises a feedback loop configured to adjust the second supply current duty cycle level dependent on a difference between the speed of rotation of the electric DC motor indicated by said sensor information and a predetermined speed.

5. A motor driven viewing device according to claim 4, wherein the control circuit is configured to activate the feedback loop during said causing the housing (10) to be rotated under control of the adjustment input signal or signals, but not during said cause the housing (10) to be rotated from a folded orientation to an operational orientation when the motor driven viewing device is powered on.

6. A motor driven viewing device according to any one of the preceding claims, wherein the first supply current duty cycle level corresponds to continuous current supply from the power supply input to the electric DC motor (25).

7. A motor driven viewing device according to any one of the preceding claims, wherein the control circuit comprises a memory (22a) and the control circuit is configured to store information about an orientation of the housing reached by said rotating under control of the adjustment input signal or signals in the memory (22a), and to set the operational orientation according to said stored information.

8. A motor driven viewing device according to any one of the preceding claims, wherein the control circuit comprises a sensor (25b), the control circuit being configured to cause the pulse width modulation circuit to supply the current from the power supply input to the electric DC motor (25) using the first supply current duty cycle level until a difference between a sensed orientation of the housing (10) and the operational orientation drops below a first predetermined non zero difference and to reduce the duty cycle level once the difference has dropped below said difference.

9. A motor driven viewing device for use on a vehicle, comprising
- a base structure (16) for mounting the motor driven viewing device on the vehicle;
- a rotatable housing (10);
- an electric DC motor (25) coupled to the housing (10) for driving a rotation of the housing (10) relative to the base structure (16);
- a control circuit comprising a pulse width modulation circuit (25a, 28), the pulse width modulation circuit (25a, 28) being coupled between the electric DC motor (10) and a power supply input, the control circuit being configured
- to cause the housing (10) to be rotated to a first orientation when the motor driven viewing device is powered off, and
to cause the housing (10) to be rotated from the first orientation to a second orientation when the motor driven viewing device is powered on, by causing the pulse width modulation circuit (25a, 28)
- to supply current from the power supply input to the electric DC motor (25) using a first supply current duty cycle level, **characterized in that** the control circuit comprises a sensor (25b) and a memory (22a), the second orientation being defined by orientation information stored in the memory (22a),
said supplying current from the power supply input to the electric DC motor (25) using the first supply current duty cycle level being continued until a difference between sensed orientation information of the housing (10) that has been sensed by the sensor (25b) and the second orientation drops below a first predetermined non zero difference, the control circuit being configured to
- subsequently reduce the duty cycle level once the difference has dropped below said difference.

## Patentansprüche

1. Motorgetriebene Sichtvorrichtung für die Verwendung in einem Fahrzeug, umfassend
- eine Basisstruktur (16) zum Befestigen der Sichtvorrichtung an dem Fahrzeug;
- ein drehbares Gehäuse (10);
- eine Vorrichtung in dem Gehäuse (10), wobei die Vorrichtung ausgewählt ist aus einer Gruppe, umfassend einen Spiegel (12);
- einen elektrischen Gleichstrommotor (25), der mit dem Gehäuse (10) gekoppelt ist, um eine Drehung des Gehäuses (10) relativ zu der Basisstruktur (16) um eine erste Drehachse anzutreiben;
- eine Steuerschaltung mit einem Eingang (24) zum Empfangen eines Einstelleingangssignals oder von Einstelleingangssignalen zum Kommunizieren einer Benutzersteuerung der Orientierung der Vorrichtung (12) von der Gruppe, wobei die Steuerschaltung eine Pulsbreitenmodulationsschaltung (25a, 28) umfasst, wobei die Pulsbreitenmodulationsschaltung (25a, 28) zwischen dem elektrischen Gleichstrommotor (25) und einem Stromversorgungseingang gekoppelt ist, wobei die Steuerschaltung konfiguriert ist,
- um das Gehäuse (10) in Drehung zu versetzen, indem die Pulsbreitenmodulationsschaltung veranlasst wird, Strom von dem Stromversorgungseingang zu dem elektrischen Gleichstrommotor (25) unter Verwendung eines ersten Versorgungsstrom-Tastverhältnispegels zu liefern, und
- um das Gehäuse (10) unter Steuerung des Einstelleingangssignals oder der Einstelleingangssignale in Drehung zu versetzen, indem die Pulsbreitenmodulationsschaltung (25a, 28) veranlasst wird, den Strom unter Verwendung eines zweiten Versorgungsstrom-Tastverhältnispegels zu liefern, der niedriger als der erste Versorgungsstrom-Tastverhältnispegel ist,
wobei die Gruppe aus einem Spiegel und einer Kamera besteht und wobei die Drehung des Gehäuses (10) unter Verwendung des ersten Versorgungsstrom-Tastverhältnispegels eine Drehung aus einer zusammengeklappten Orientierung in eine Betriebsorientierung ist, wenn die motorgetriebene Sichtvorrichtung eingeschaltet ist.

2. Motorbetriebene Sichtvorrichtung nach Anspruch 1, umfassend einen weiteren Elektromotor (26) zum Antreiben der Drehung des Spiegels (12) oder der Kamera relativ zu dem Gehäuse (10) um eine zweite Drehachse des Spiegels (12) oder der Kamera, die quer zu der ersten Drehachse verläuft, wobei der weitere Elektromotor (26) konfiguriert ist, um eine erste Winkeldrehgeschwindigkeit des Spiegels (12) oder der Kamera bereitzustellen, wobei der zweite Versorgungsstrom-Tastverhältnispegel eingestellt ist, um das Gehäuse (10) mit einer zweiten Winkeldrehgeschwindigkeit rotieren zu lassen, die der ersten Winkeldrehgeschwindigkeit entspricht oder sich um weniger als einen Faktor zwei von der ersten Winkeldrehgeschwindigkeit unterscheidet.

3. Motorbetriebene Sichtvorrichtung nach einem der vorstehenden Ansprüche, wobei der elektrische Gleichstrommotor (25) für eine erste Motordrehzahl konfiguriert ist, wenn er mit dem ersten Versorgungsstrom-Tastverhältnispegel versorgt wird, und wobei der zweite Versorgungsstrom-Tastverhältnispegel so gewählt ist, dass eine zweite Motordrehzahl des elektrischen Gleichstrommotors (25), bei Versorgung mit dem zweiten Versorgungsstrom-Tastverhältnispegel weniger als ein Fünftel der ersten Motordrehzahl des elektrischen Gleichstrommotors (25) beträgt.

4. Motorbetriebene Sichtvorrichtung nach einem der vorstehenden Ansprüche, umfassend einen Sensor zum Erfassen von Sensorinformationen, die eine Drehzahl des elektrischen Gleichstrommotors (25) angeben, und wobei die Steuerschaltung eine Rückkopplungsschleife umfasst, die konfiguriert ist, um den zweiten Versorgungsstrom-Tastverhältnispegel in Abhängigkeit von einer Differenz zwischen der durch die Sensorinformationen angegebenen Drehzahl des elektrischen Gleichstrommotors und einer vorbestimmten Drehzahl einzustellen.

5. Motorbetriebene Sichtvorrichtung nach Anspruch 4, wobei die Steuerschaltung konfiguriert ist, um die Rückkopplungsschleife zu aktivieren, während das Gehäuse (10) veranlasst wird, unter der Steuerung des Einstelleingangssignals oder der Einstelleingangssignale gedreht zu werden, jedoch nicht, während das Gehäuse (10) veranlasst wird, von einer zusammengeklappten Orientierung in eine Betriebsorientierung gedreht zu werden, wenn die motorbetriebene Sichtvorrichtung eingeschaltet ist.

6. Motorbetriebene Sichtvorrichtung nach einem der vorstehenden Ansprüche, wobei der erste Versorgungsstrom-Tastverhältnispegel einer kontinuierlichen Stromversorgung von dem Stromversorgungseingang zu dem elektrischen Gleichstrommotor (25) entspricht.

7. Motorbetriebene Sichtvorrichtung nach einem der vorstehenden Ansprüche, wobei die Steuerschaltung einen Speicher (22a) umfasst und die Steuerschaltung konfiguriert ist, um Informationen über eine Ausrichtung des Gehäuses zu speichern, die durch die Drehung unter Steuerung des Einstelleingangssignals oder der Einstelleingangssignale in dem Speicher (22a) erreicht wird, und um die Betriebsausrichtung gemäß den gespeicherten Informationen einzustellen.

8. Motorbetriebene Sichtvorrichtung nach einem der vorstehenden Ansprüche, wobei die Steuerschaltung einen Sensor (25b) umfasst, wobei die Steuerschaltung konfiguriert ist, um die Pulsbreitenmodulationsschaltung zu veranlassen, den Strom von dem Stromversorgungseingang an den elektrischen Gleichstrommotor (25) unter Verwendung des ersten Versorgungsstrom-Tastverhältnispegels zu liefern, bis eine Differenz zwischen einer erfassten Ausrichtung des Gehäuses (10) und der Betriebsausrichtung unter eine erste vorbestimmte Nicht-Null-Differenz fällt, und um den Tastverhältnispegel zu reduzieren, sobald die Differenz unter die Differenz gefallen ist.

9. Motorgetriebene Sichtvorrichtung für die Verwendung in einem Fahrzeug, umfassend
- eine Basisstruktur (16) zum Befestigen der motorbetriebenen Sichtvorrichtung an dem Fahrzeug;
- ein drehbares Gehäuse (10);
- einen elektrischen Gleichstrommotor (25), der mit dem Gehäuse (10) gekoppelt ist, um eine Drehung des Gehäuses (10) relativ zu der Basisstruktur (16) anzutreiben;
- eine Steuerschaltung, umfassend eine Pulsbreitenmodulationsschaltung (25a, 28), wobei die Pulsbreitenmodulationsschaltung (25a, 28) zwischen dem elektrischen Gleichstrommotor (25) und einem Stromversorgungseingang gekoppelt ist, wobei die Steuerschaltung konfiguriert ist
- um das Gehäuse (10) in eine erste Ausrichtung zu drehen, wenn die motorbetriebene Sichtvorrichtung ausgeschaltet ist, und
- um das Gehäuse (10) von der ersten Ausrichtung in eine zweite Ausrichtung zu drehen, wenn die motorbetriebene Sichtvorrichtung eingeschaltet wird, indem die Pulsbreitenmodulationsschaltung (25a, 28) veranlasst wird
- Strom von dem Stromversorgungseingang an den elektrischen Gleichstrommotor (25) unter Verwendung eines ersten Versorgungsstrom-Tastverhältnispegels zu liefern, **dadurch gekennzeichnet, dass** die Steuerschaltung einen Sensor (25b) und einen Speicher (22a) umfasst, wobei die zweite Ausrichtung durch in dem Speicher (22a) gespeicherte Ausrichtungsinformationen definiert ist,
wobei die Stromversorgung von dem Stromversorgungseingang zu dem elektrischen Gleichstrommotor (25) unter Verwendung des ersten Versorgungsstrom-Tastverhältnispegels fortgesetzt wird, bis eine Differenz zwischen der erfassten Ausrichtungsinformation des Gehäuses (10), die von dem Sensor (25b) erfasst wurde, und der zweiten Ausrichtung unter eine erste vorbestimmte Nicht-Null-Differenz fällt, wobei die Steuerschaltung konfiguriert ist, um
- anschließend den Tastverhältnispegel zu reduzieren, sobald die Differenz unter diese Differenz gesunken ist.

## Revendications

1. Dispositif de visualisation entraîné par moteur pour son utilisation sur un véhicule, comprenant
- une structure de base (16) pour monter le dispositif de visualisation sur le véhicule ;
- un boîtier (10) rotatif ;
- un dispositif dans le boîtier (10), le dispositif étant sélectionné dans un groupe comprenant un miroir (12) ;
- un moteur électrique c.c. (25) couplé au boîtier (10) pour entraîner une rotation du boîtier (10) par rapport à la structure de base (16) autour d'un premier axe de rotation ;
- un circuit de commande ayant une entrée (24) pour recevoir un signal ou des signaux d'entrée de réglage pour communiquer une commande utilisateur d'orientation du dispositif (12) dans ledit groupe, le circuit de commande comprenant un circuit de modulation d'impulsions en durée (25a, 28), le circuit de modulation d'impulsions en durée (25a, 28) étant couplé entre le moteur électrique c.c. (25) et une entrée d'alimentation électrique, le circuit de commande étant configuré
- pour amener le boîtier (10) à être tourné en amenant le circuit de modulation d'impulsions en durée à fournir du courant depuis l'entrée d'alimentation électrique jusqu'au moteur électrique c.c. (25) en utilisant un premier niveau de facteur de forme de courant d'alimentation, et
- pour amener le boîtier (10) à être tourné sous la commande du signal ou des signaux d'entrée de réglage en amenant le circuit de modulation d'impulsions en durée (25a, 28) à fournir le courant en utilisant un deuxième niveau de facteur de forme de courant d'alimentation, inférieur au premier niveau de facteur de forme de courant d'alimentation dans lequel le groupe consiste en un miroir et une caméra et dans lequel ladite rotation du boîtier (10) utilisant le premier niveau de facteur de forme de courant d'alimentation est une rotation depuis une orientation repliée jusqu'à une orientation opérationnelle lorsque le dispositif de visualisation entraîné par moteur est allumé.

2. Dispositif de visualisation entraîné par moteur selon la revendication 1, comprenant un autre moteur électrique (26) pour entraîner une rotation du miroir (12) ou de la caméra par rapport au boîtier (10) autour d'un deuxième axe de rotation du miroir (12) ou de la caméra qui est transversal par rapport au premier axe de rotation, l'autre moteur électrique (26) étant configuré pour fournir une première vitesse de rotation angulaire du miroir (12) ou de la caméra, le deuxième niveau de facteur de forme de courant d'alimentation étant fixé pour amener le boîtier (10) à tourner à une deuxième vitesse de rotation angulaire qui est égale à la première vitesse de rotation angulaire ou diffère de moins d'un facteur deux par rapport à la première vitesse de rotation angulaire.

3. Dispositif de visualisation entraîné par moteur selon l'une quelconque des revendications précédentes, dans lequel le moteur électrique c.c. (25) est configuré pour avoir une première vitesse de rotation de moteur lorsqu'il est alimenté au premier niveau de facteur de forme de courant d'alimentation et dans lequel le deuxième niveau de facteur de forme de courant d'alimentation est sélectionné de sorte qu'une deuxième vitesse de rotation de moteur du moteur électrique c.c. (25) lorsqu'il est alimenté au deuxième niveau de facteur de forme de courant d'alimentation soit inférieure à un cinquième de la première vitesse de rotation de moteur du moteur électrique c.c. (25).

4. Dispositif de visualisation entraîné par moteur selon l'une quelconque des revendications précédentes, comprenant un capteur pour détecter des informations de capteur indiquant une vitesse de rotation du moteur électrique c.c. (25), et dans lequel le circuit de commande comprend une boucle de rétroaction configurée pour régler le deuxième niveau de facteur de forme de courant d'alimentation en fonction d'une différence entre la vitesse de rotation du moteur électrique c.c. indiquée par lesdites informations de capteur et une vitesse prédéterminée.

5. Dispositif de visualisation entraîné par moteur selon la revendication 4, dans lequel le circuit de commande est configuré pour activer la boucle de rétroaction pendant que le boîtier (10) est amené à être tourné sous la commande du signal ou des signaux d'entrée de réglage, mais pas pendant que le boîtier (10) est amené à être tourné depuis une orientation repliée jusqu'à une orientation opérationnelle lorsque le dispositif de visualisation entraîné par moteur est allumé.

6. Dispositif de visualisation entraîné par moteur selon l'une quelconque des revendications précédentes, dans lequel le premier niveau de facteur de forme de courant d'alimentation correspond à une alimentation en courant continu depuis l'entrée d'alimentation en courant jusqu'au moteur électrique c.c. (25).

7. Dispositif de visualisation entraîné par moteur selon l'une quelconque des revendications précédentes, dans lequel le circuit de commande comprend une mémoire (22a) et le circuit de commande est configuré pour stocker des informations sur une orientation du boîtier atteinte par ladite rotation sous la commande du signal ou des signaux d'entrée de réglage dans la mémoire (22a), et pour fixer l'orientation opérationnelle conformément auxdites informations stockées.

8. Dispositif de visualisation entraîné par moteur selon l'une quelconque des revendications précédentes, dans lequel le circuit de commande comprend un capteur (25b), le circuit de commande étant configuré pour amener le circuit de modulation d'impulsions en durée à fournir le courant depuis l'entrée d'alimentation électrique jusqu'au moteur électrique c.c. (25) en utilisant le premier niveau de facteur de forme de courant d'alimentation jusqu'à ce qu'une différence entre une orientation détectée du boîtier (10) et l'orientation opérationnelle tombe en dessous d'une première différence non nulle prédéterminée et pour réduire le niveau de facteur de forme une fois que la différence est tombée en dessous de ladite différence.

9. Dispositif de visualisation entraîné par moteur pour son utilisation sur un véhicule, comprenant
- une structure de base (16) pour monter le dispositif de visualisation entraîné par moteur sur le véhicule ;
- un boîtier (10) rotatif ;
- un moteur électrique c.c. (25) couplé au boîtier (10) pour entraîner une rotation du boîtier (10) par rapport à la structure de base (16) ;
- un circuit de commande comprenant un circuit de modulation d'impulsions en durée (25a, 28), le circuit de modulation d'impulsions en durée (25a, 28) étant couplé entre le moteur électrique c.c. (25) et une entrée d'alimentation électrique, le circuit de commande étant configuré
- pour amener le boîtier (10) à être tourné jusqu'à une première orientation lorsque le dispositif de visualisation entraîné par moteur est éteint, et
- pour amener le boîtier (10) à être tourné depuis la première orientation jusqu'à une deuxième orientation lorsque le dispositif de visualisation entraîné par moteur est allumé, en amenant le circuit de modulation d'impulsions en durée (25a, 28)
- à fournir du courant depuis l'entrée d'alimentation électrique jusqu'au moteur électrique c.c. (25) en utilisant un premier niveau de facteur de forme de courant d'alimentation, **caractérisé en ce que** le circuit de commande comprend un capteur (25b) et une mémoire (22a), la deuxième orientation étant définie par des informations d'orientation stockées dans la mémoire (22a),
ladite fourniture de courant depuis l'entrée d'alimentation électrique jusqu'au moteur électrique c.c. (25) en utilisant le premier niveau de facteur de forme de courant d'alimentation étant poursuivie jusqu'à ce qu'une différence entre des informations d'orientation détectées du boîtier (10) qui ont été détectées par le capteur (25b) et la deuxième orientation tombe en dessous d'une première différence non nulle prédéterminée, le circuit de commande étant configuré pour
- réduire par la suite le niveau de facteur de forme une fois que la différence est tombée en dessous de ladite différence.
